# EUROPEAN PATENT SPECIFICATION

(11) **EP 3 064 614 B1**
(45) Date of publication and mention of the grant of the patent: **20.06.2018**
(21) Application number: 14858854.4
(22) Date of filing: 29.10.2014
(51) Int. Cl.: C25B 11/06, B01J 23/78, C25B 1/04

(54) **ANODE FOR ALKALINE WATER ELECTROLYSIS**
ANODE FÜR ALKALISCHE WASSERELEKTROLYSE
ANODE POUR L'ÉLECTROLYSE D'UNE EAU ALCALINE

(30) Priority: 29.10.2013 JP 2013224771
(43) Date of publication of application: 07.09.2016
(73) Proprietor: National University Corporation Yokohama National University, Kanagawa 240-8501 (JP); De Nora Permelec Ltd, Fujisawa-shi Kanagawa 252-0816 (JP)
(72) Inventor: ICHIKAWA, Hiroki, Yokohama-shi Kanagawa 240-8501 (JP); MITSUSHIMA Shigenori, Yokohama-shi Kanagawa 240-8501 (JP); NAGASHIMA Ikuo, Akashi-shi Hyogo 673-8666 (JP); SUNADA Yoshio, Tokyo 103-0025 (JP); KATO Akihiro, Fujisawa-shi Kanagawa 252-0816 (JP); YIN Liang, Fujisawa-shi Kanagawa 252-0816 (JP); MANABE Akiyoshi, Fujisawa-shi Kanagawa 252-0816 (JP); NISHIKI Yoshinori, Fujisawa-shi Kanagawa 252-0816 (JP)
(74) Representative: Blodig, Wolfgang
(86) International application number: PCT/JP2014/078777
(87) International publication number: WO 2015/064644

(56) References cited:
- JP-A- 2008 506 845
- JP-A- 2014 203 809
- JP-B2- 5 207 407
- US-A- 2 914 596
- US-A- 3 042 551
- US-A- 3 226 264

## Description

### Technical Field

The present invention relates to an anode used in alkaline water electrolysis, and particularly to an oxygen evolution anode for alkaline water electrolysis that uses electric power with large power fluctuations.

### Background Art

Hydrogen is a secondary energy source that is suitable for storage and transport and has a low environmental load. Therefore, the spotlight is focused on a hydrogen energy system that uses hydrogen as an energy carrier. At present, hydrogen is mainly produced by, for example, steam reforming of fossil fuels, but the importance of alkaline water electrolysis that uses renewable energy as a power source has been increasing from the viewpoint of global warming and depletion of fossil fuels.

Water electrolysis is broadly divided into alkaline water electrolysis in which a high-concentration aqueous alkaline solution is used as an electrolyte and solid polymer water electrolysis in which a solid polymer electrolyte (SPE) is used as an electrolyte. In the case where a large-scale hydrogen production is conducted by water electrolysis, alkaline water electrolysis that uses an inexpensive material such as a light metal, e.g., nickel is said to be more suitable than solid polymer water electrolysis that uses a diamond electrode or the like. The electrode reactions at both electrodes are as follows.

Anodic reaction: 2OH⁻ → H₂O + 1/2O₂ + 2e⁻ (1)

Cathodic reaction: 2H₂O + 2e⁻ → H₂ + 2OH⁻ (2)

As the temperature increases, a high-concentration aqueous alkaline solution has not only higher conductivity but also higher corrosiveness. Therefore, the upper limit of the working temperature is about 80°C to 90°C. As a result of the development of materials for electrolytic cells and pipes that can withstand a high-temperature and high-concentration aqueous alkaline solution, the development of low-resistance diaphragms, and the development of electrodes having an increased surface area and provided with a catalyst, the electrolysis performance has increased to about 1.7 to 1.9 V (efficiency: 78 to 87%) at a current density of 0.3 to 0.4 Acm⁻².

It has been reported that an oxygen evolution anode for alkaline water electrolysis is made of a nickel-based material which is stable in a high-concentration aqueous alkaline solution, and a Ni-based electrode has a lifetime of more than several tens of years in alkaline water electrolysis that uses a stable power source (NPL 1 and NPL 2). However, in alkaline water electrolysis that uses renewable energy as a power source, there have been problems such as degradation of Ni anode performance caused by severe conditions such as sudden operation stops and load variations (NPL 3). The reason for this may be as follows. It is thermodynamically known that nickel is stable in the form of nickel hydroxide with a valence of 2 in an aqueous alkaline solution, and the oxidation reaction of nickel proceeds around the reaction potential of oxygen evolution. The following production reaction of nickel oxide is assumed to proceed.

Ni + 2OH⁻ → Ni(OH)₂ + 2e⁻ (3)

As the potential increases, nickel is oxidized into trivalent nickel and tetravalent nickel. The equations are as follows.

Ni(OH)₂ + OH⁻ → NiOOH + H₂O + e⁻ (4)

NiOOH + OH⁻ → NiO₂ + H₂O + e⁻ (5)

Since the production reaction of nickel oxide and the reduction reaction of nickel oxide proceed on a surface of the metal, detachment of the electrode catalyst formed on the surface is facilitated. When the supply of electric power for performing electrolysis stops, the electrolysis stops. The nickel anode is maintained at an electrode potential lower than the oxygen evolution potential (1.23 Vvs.RHE) and higher than the hydrogen evolution potential (0.00 Vvs.RHE) of a hydrogen evolution cathode serving as a counter electrode. Consequently, an electromotive force is generated in a cell due to the chemical species. The anode is maintained at a low potential through the progress of the cell reaction. In other words, the reduction reaction of the oxide is facilitated in accordance with the equations (3), (4), and (5). In such a cell reaction, when a large cell is fabricated, leakage of electric current occurs through a shared pipe. Thus, a technique of preventing the leakage of electric current is a matter that should always be considered. One of the techniques is to continuously feed a minute electric current when the electrolysis stops. However, this requires special power control. Furthermore, since oxygen and hydrogen are always generated, much effort is needed for maintenance. To intentionally avoid the reverse current state, a solution is removed immediately after the stoppage, whereby such a cell reaction can be prevented. However, this is not an appropriate process in the case where the electrolysis is assumed to be performed using electric power with large power fluctuations that is generated by using renewable energy.

In nickel batteries, such an oxide and hydroxide are used as an active material. On the other hand, in alkaline water electrolysis, such activity of a nickel material is preferably suppressed.

For example, at least one component selected from platinum group metals, platinum group metal oxides, valve metal oxides, iron group oxides, and lanthanide group metal oxides has been used as a catalytic layer for oxygen evolution anodes used in alkaline water electrolysis. Other known examples of anode catalysts include nickel-based alloys such as Ni-Co and Ni-Fe; nickel whose surface area is increased; ceramic materials, e.g., spinel conductive oxides such as Co₃O₄ and NiCo₂O₄ and perovskite conductive oxides such as LaCoO₃ and LaNiO₃; precious metal oxides; and oxides composed of lanthanide group metals and precious metals (NPL 4).

Regarding an oxygen evolution anode used in alkaline water electrolysis, nickel itself has low oxygen overvoltage and, in particular, a nickel-plated electrode containing sulfur is used as an anode for water electrolysis.

An anode produced by forming a lithium-containing nickel oxide layer on a surface of a nickel substrate in advance is known as an oxygen evolution anode used for alkaline water electrolysis that uses a high-concentration aqueous alkaline solution (PLT 1 and PLT 2). A similar anode produced by forming a lithium-containing nickel oxide layer has been disclosed as a nickel electrode used not for alkaline water electrolysis but for alkaline primary cells, which are utilized as hydrogen-oxygen fuel cells that use an aqueous alkaline solution as an electrolyte (PLT 3).

However, the ratio of lithium to nickel and the production method thereof are not disclosed in PLTs 1-3. The stability under the application of electric power with large power fluctuations is also not disclosed.

It is disclosed that, in brine electrolysis, an intermediate layer mainly composed of nickel oxide is formed between a nickel substrate and a cathode catalyst made of a precious metal or a precious metal oxide to prevent the degradation of the nickel substrate of a hydrogen evolution cathode in an aqueous alkaline solution due to an oxidation reaction under the reverse current conditions (PLT 4 and PLT 5). In PLT 4 and PLT 5, the intermediate layer mainly composed of nickel oxide is formed, and thus the substrate is fired at a relatively low temperature of 350°C to 550°C. Such an intermediate layer is used to stabilize a catalytic layer, and cannot be used as a catalytic layer of an electrode. Furthermore, it cannot be imagined at all what effects are provided by the catalytic layer of an electrode in an oxygen evolution anode used for alkaline water electrolysis that uses a high-concentration aqueous alkaline solution, in particular, under the application of electric power with large power fluctuations.

### Citation List

### Patent Literature

{PTL 1}
   British Patent No. 864457
{PTL 2}
   U.S. Patent No. 2928783
{PTL 3}
   U.S. Patent No. 2716670
{PTL 4}
   Japanese Unexamined Patent Application Publication No. 2000-239882 (Japanese Patent No. 412191)
{PTL 5}
   Japanese Unexamined Patent Application Publication No. 2008-57968 (Japanese Patent No. 4927006)

### Non Patent Literature

{NPL 1}
   P. W. T. Lu, S. Srinivasan, J. Electrochem. Soc., vol. 125, p. 1416 (1978)
{NPL 2}
   C. T. Bowen, Int. J. Hydrogen Energy, vol. 9, p. 59 (1984)
{NPL 3}
   S. Mitsushima, K. Matsuzawa, Hydrogen Energy System, vol. 36, p. 11 (2011)
{NPL 4} J. P. Singh, N. K. Singh, R. N. Singh, Int. J. Hydrogen Energy, vol. 24, p. 433 (1999)

### Summary of Invention

### Technical Problem

It is an object of the present invention to provide an anode for alkaline water electrolysis that overcomes the above problems, can generate hydrogen through water electrolysis which uses electric power with large power fluctuations that is generated by using renewable energy, and has high durability against power fluctuations.

### Solution to Problem

A first aspect of the present invention provides an anode for alkaline water electrolysis that includes a conductive substrate having at least a surface made of nickel or a nickel-base alloy and a catalytic layer formed on the surface of the conductive substrate and made of lithium-containing nickel oxide, wherein a molar ratio (Li/Ni) of lithium and nickel of the lithium-containing nickel oxide in the catalytic layer is in the range of 0.005 to 0.15.

A second aspect of the present invention provides the anode for alkaline water electrolysis used to perform alkaline water electrolysis using electric power with large power fluctuations that is generated by wind power, solar power, or the like.

A third aspect of the present invention provides a method for producing an anode for alkaline water electrolysis, the method including applying a solution containing lithium ions onto a surface of a conductive substrate having at least a surface made of nickel or a nickel-base alloy and heat-treating the conductive substrate in an atmosphere containing oxygen at a temperature of 900°C to 1000°C to form a catalytic layer made of lithium-containing nickel oxide, wherein a molar ratio (Li/Ni) of lithium and nickel is in the range of 0.005 to 0.15.

A fourth aspect of the present invention provides the method for producing an anode for alkaline water electrolysis in which the heat treatment may be performed for 5 to 60 minutes.

A fifth aspect of the present invention provides the method for producing an anode for alkaline water electrolysis in which nickel ions may be contained in the solution containing lithium ions.

In the present invention, as a result of thorough studies on the conditions for forming a catalytic layer made of lithium-containing nickel oxide on a surface of a conductive substrate having at least a surface made of nickel or a nickel-base alloy, it has been found that, only in the case where the molar ratio (Li/Ni) of lithium and nickel is in the particular range of 0.005 to 0.15, which indicates a low content of lithium in nickel oxide, the catalytic layer can provide durable electrode performance as a catalytic layer of an anode for alkaline water electrolysis. Furthermore, in the present invention, it has been found that, to form a catalytic layer made of lithium-containing nickel oxide by a heat treatment method so that the molar ratio (Li/Ni) of lithium and nickel is in the range of 0.005 to 0.15, the conductive substrate needs to be heat-treated in an atmosphere containing oxygen in a limited high-temperature range of 900°C to 1000°C.

### Advantageous Effects of Invention

According to the present invention, there can be obtained an anode for alkaline water electrolysis that includes a lithium-containing nickel oxide catalytic layer with a molar ratio (Li/Ni) of lithium and nickel of 0.005 to 0.15, the catalytic layer being formed on a surface of a conductive substrate having at least a surface made of nickel or a nickel-base alloy, and there can be provided an anode suitable for performing alkaline water electrolysis using electric power with large power fluctuations that is generated by wind power, solar power, or the like.

Furthermore, according to the present invention, a lithium-containing nickel oxide catalytic layer with a molar ratio (Li/Ni) of lithium and nickel of 0.005 to 0.15 can be formed by applying a solution containing a lithium compound onto a surface of a conductive substrate having at least a surface made of nickel or a nickel-base alloy, and heat-treating the conductive substrate in an atmosphere containing oxygen at a temperature of 900°C to 1000°C. The crystal structure of the produced lithium-containing nickel oxide can be maintained even after the long-term use. Furthermore, a high-performance anode for alkaline water electrolysis having corrosion resistance maintained even after the long-term use can be provided.

The reason why an anode for alkaline water electrolysis is improved may be as follows. By appropriately controlling the ratio of lithium and nickel and performing a heat treatment at an appropriate temperature, a wetted surface area of the nickel substrate is decreased and thus the substrate is stabilized. In addition, by adding lithium to the nickel oxide of the catalytic layer, the electron conductivity of the nickel oxide film is improved, and thus both the activity and durability for an electrode are improved.

### Brief Description of Drawings

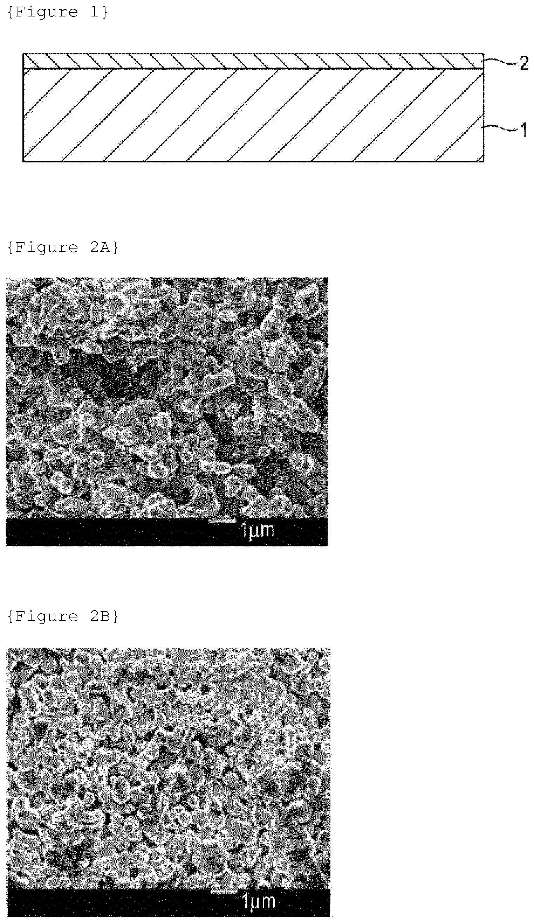

{Fig. 1}
   Fig. 1 schematically shows an anode for alkaline water electrolysis according to an embodiment of the present invention;
{Fig. 2A}
   Fig. 2A is an electron micrograph of an anode for alkaline water electrolysis before a cycle test, the anode being produced in Example 1 of the present invention;
{Fig. 2B}
   Fig. 2B is an electron micrograph of an anode for alkaline water electrolysis after the cycle test, the anode being produced in Example 1 of the present invention;
{Fig. 3}
   Fig. 3 is a graph showing the results of X-ray diffraction analysis performed on anodes for alkaline water electrolysis before and after the cycle test, the anodes being produced in Example 1 and Comparative Example 1 of the present invention;
{Fig. 4A}
   Fig. 4A is an electron micrograph of an anode for alkaline water electrolysis before the cycle test, the anode being produced in Comparative Example 2 of the present invention;
{Fig. 4B}
   Fig. 4B is an electron micrograph of an anode for alkaline water electrolysis after the cycle test, the anode being produced in Comparative Example 2 of the present invention;
{Fig. 5A}
   Fig. 5A is an electron micrograph of an anode for alkaline water electrolysis before the cycle test, the anode being produced in Comparative Example 3 of the present invention;
{Fig. 5B}
   Fig. 5B is an electron micrograph of an anode for alkaline water electrolysis after the cycle test, the anode being produced in Comparative Example 3 of the present invention;
{Fig. 6}
   Fig. 6 is a graph showing the results of X-ray diffraction analysis performed on the anodes for alkaline water electrolysis before and after the cycle test, the anodes being produced in Comparative Example 3 of the present invention;
{Fig. 7A}
   Fig. 7A is an electron micrograph of an anode for alkaline water electrolysis before the cycle test, the anode being produced in Comparative Example 4 of the present invention; and
{Fig. 7B}
   Fig. 7B is an electron micrograph of an anode for alkaline water electrolysis after the cycle test, the anode being produced in Comparative Example 4 of the present invention.

### Description of Embodiments

An embodiment of the present invention will now be described with reference to the attached drawings.

Fig. 1 schematically shows an anode for alkaline water electrolysis according to an embodiment of the present invention. The anode includes an anode substrate 1 and a catalytic layer 2 composed of lithium-containing nickel oxide.

### (Anode substrate)

The anode substrate 1 is a conductive substrate having at least a surface made of nickel or a nickel-base alloy. The anode substrate 1 is preferably composed of a material such as stainless steel, nickel, iron, or Ni-plated iron in terms of conductivity and chemical stability. The anode substrate 1 has a thickness of 0.05 to 5 mm. The anode substrate 1 preferably has a shape with an opening to remove generated oxygen bubbles. Nickel expanded mesh and porous nickel expanded mesh can be employed, and the porosity is preferably 10 to 95%. The surface of the anode substrate 1 is preferably subjected to a surface roughening treatment to increase the adhesive strength with the catalytic layer 2. Examples of the surface roughening treatment include a known blasting treatment for blowing powder, an etching treatment using an acid that can dissolve a substrate, and a plasma spraying treatment. A chemical etching treatment is performed to remove contaminating particles of, for example, metals and organic substances on the surface. The consumption of the nickel substrate is preferably about 30 to 400 g/m².

### (Catalytic layer)

When the nickel substrate is heat-treated in an atmosphere containing oxygen, such as an air atmosphere, the reaction between oxygen and nickel occurs and a Ni oxide layer can be formed on a surface of the substrate. The oxygen concentration is preferably 2% by volume or more to achieve the heat treatment within the temperature range and time range described below. If the oxygen concentration is less than 2%, a desired oxide is not obtained. In the present invention, a solution containing lithium such as 5 to 25 mass% lithium hydroxide is applied and then heat-treated, whereby a lithium-containing nickel oxide can be obtained. Examples of a lithium raw material include lithium nitrate, lithium carbonate, and lithium chloride. An aqueous solution of the lithium raw material with an appropriate concentration can be used as a coating solution. The heat treatment is performed after drying.

Although depending on the production conditions of the oxide, the heat treatment temperature is preferably 900°C to 1000°C and the heat treatment time is preferably 5 to 60 minutes. In the case where the heat treatment temperature is higher than 1000°, if the heat treatment time is longer than 60 minutes, the thickness of the oxide increases. Thus, good catalytic characteristics for electrodes are not achieved. If the heat treatment time is shorter than 5 minutes, the oxide does not have a sufficient thickness and only a nonuniform layer is formed. In the case where the heat treatment temperature is lower than 900°C, if the heat treatment time is longer than 60 minutes, a desired oxide is obtained. However, an excessively long time is required, which is not practical. The optimum thickness of the oxide is about 0.1 to 100 µm. Preferably, a good electron conductive layer is uniformly formed on the surface so that the metal of the substrate does not contact an aqueous alkaline solution serving as an electrolytic solution. When the heat treatment temperature is set to be 900°C to 1000°C, the produced lithium-containing nickel oxide can maintain its crystal structure even after its long-term use, which can provide a high-performance anode for alkaline water electrolysis having corrosion resistance maintained even after the long-term use.

In the method for forming the catalytic layer, a composite oxide can also be obtained by applying a solution containing nickel and lithium, and performing a heat treatment in the same manner. Examples of a nickel raw material include nickel nitrate, nickel carbonate, and nickel chloride. An aqueous solution of the nickel raw material with an appropriate concentration can be used as a coating solution.

The molar ratio Li/Ni of lithium and nickel is preferably in the range of 0.005 to 0.15. If the molar ratio is smaller than 0.005, the conductivity cannot be improved. If the molar ratio is larger than 0.15, the physical strength and the chemical stability are not sufficiently achieved.

The detailed reasons why the molar ratio Li/Ni of lithium and nickel is set to be in the range of 0.005 to 0.15 in the present invention will be described below.

The lithium-containing nickel oxide suitable in the present invention can be represented by LiₓNi₁₋ₓO, and it is estimated by X-ray diffraction (XRD) analysis that the lithium-containing nickel oxide contains Li_{0.208}Ni_{1.792}O₂. It is known that semiconductor characteristics are imparted to nickel oxide by performing doping with lithium, which is realized when the molar ratio Li/Ni is 0.005 or more.

The conductivity of semiconductors is provided by performing doping with an impurity in a lower concentration (1 ppm → 0.001%). However, the voltage loss caused when the current density in industrial electrolysis is applied needs to be limited to at most several tens of millivolts. Thus, a doping concentration (0.5% → 5,000 ppm) that achieves the above voltage loss is actually required.

As described in Example 1 below, the Li/Ni ratio of Li_{0.208}Ni_{1.792}O₂, which is a composition confirmed by X-ray diffraction analysis after a cycle test, is 0.116. However, it is known that the ionic radius of lithium having a valence of 1 is close to that of nickel having a valence of 2, which causes a phenomenon in which part of nickel enters a lithium layer and part of lithium enters a transition metal layer. Therefore, it is assumed that the Li/Ni ratio is not limited to the composition determined by XRD and has a distribution in the catalytic layer.

As described in Comparative Example 1, in the case where the heat treatment is performed at 800°C, a large amount of Li_{0.308}Ni_{1.692}O₂ (Li/Ni ratio: 0.177) having a large Li proportion is assumed to be present before a cycle test. However, after the cycle test, both peaks representing Li_{0.208}Ni_{1.792}O₂ and Li_{0.308}Ni_{1.692}O₂ disappear. This may be because the stability of Li_{0.308}Ni_{1.692}O₂ is not sufficiently high. Therefore, it has been found that the Li/Ni ratio in the present invention is preferably 0.15 or less.

Instead of the heat treatment, the following film formation methods such as CVD and PVD can also be employed.
(1) CVD method: A gas containing a metal is decomposed by plasma to generate a metal atom, and a coating film is formed on a substrate kept at a high temperature (about 800°C).
(2) PVD method: The PVD method includes a sputtering method and an ion plating method.

The sputtering method is a method in which ions of argon or the like are caused to collide with a solid metal to sputter a metal atom in the form of particles. The sputtered particles are substantially electrically neutral and thus the energy of particles for forming a coating film is low.

The ion plating method is a method in which a solid metal is evaporated by heat of generated electron flow to obtain a metal atom, and at the same time most of the metal atom is ionized and a coating film is formed using the ions.

In terms of the method for generating electron flow, the ion plating method is classified into an arc ion plating method, a method using a hollow cathode, and a method using an electron gun.

The arc ion plating method is a method in which a target is subjected to vacuum discharge between a cathode and an anode to evaporate and ionize a material from the surface of the target. In the arc ion plating method, the ionization rate of metal vapor is as high as 80% or more, and thus a dense film with excellent adhesiveness can be formed at high speed. In the method using a hollow cathode, the ionization rate is middle. In the method using an electron gun, the ionization rate is low.

Constituent materials of an alkaline water electrolysis cell other than the anode will be described below.

In a cathode, a substrate composed of a material that can withstand alkaline water electrolysis and a catalyst with a low cathode overvoltage need to be selected. A nickel itself or a substrate obtained by coating a nickel substrate with an active cathode is used as the cathode substrate. As in the case of the anode, nickel expanded mesh and porous nickel expanded mesh can be employed as the substrate. A porous nickel electrode having a large surface area and a Ni-Mo electrode have been widely studied as the material for the cathode. In addition, Raney nickel such as Ni-Al, Ni-Zn, or Ni-Co-Zn, sulfides such as Ni-S, and hydrogen storage alloys such as Ti₂Ni have been studied. It is important to have characteristics such as low hydrogen overvoltage, high short-circuit resistance, and high poisoning resistance. Preferred examples of other catalysts include metals such as platinum, palladium, ruthenium, and iridium and oxides of the forgoing metals.

For example, asbestos, nonwoven fabric, an ion exchange membrane, a polymer porous membrane, and a composite membrane of an inorganic substance and an organic polymer have been proposed as a diaphragm for electrolysis. An example of the diaphragm for electrolysis is an ion-permeable diaphragm in which an organic fibrous cloth is contained in a mixture containing a hydrophilic inorganic material such as a calcium phosphate compound or calcium fluoride and an organic binder material selected from polysulfone, polypropylene, and polyvinylidene fluoride. Another example of the diaphragm for electrolysis is an ion-permeable diaphragm in which an extended organic fibrous cloth is contained in a film-forming mixture composed of a particulate inorganic hydrophilic substance selected from oxides and hydroxides of antimony and zirconium, and an organic binder selected from a fluorocarbon polymer, polysulfone, polypropylene, polyvinyl chloride, and polyvinyl butyral.

In the alkaline water electrolysis according to the present invention, a solution prepared by adding high-concentration alkaline water so as to have a particular alkali concentration is used as the electrolytic solution. Caustic alkalis such as caustic potash and caustic soda are preferably used, and the concentration is preferably 1.5 to 40% by mass. The concentration is particularly preferably 15 to 40% by mass, which provides high electrical conductivity, in terms of suppressing the power consumption. However, the concentration is more preferably 20 to 30% by mass in consideration of the cost required for electrolysis, corrosiveness, viscosity, and usability.

### Examples

Examples of the present invention will be described below, but the present invention is not limited thereto.

### (Example 1)

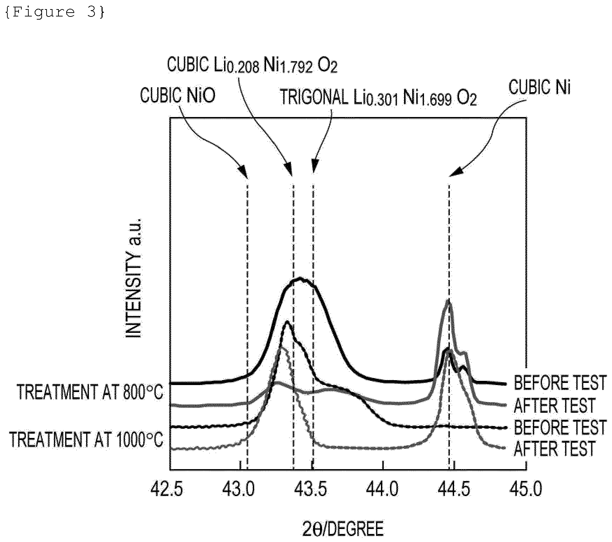

A nickel plate subjected to mirror polishing (polishing with P8000 corresponding to a particle size of 1 µm) at room temperature was used as an electrode substrate. The nickel plate was immersed in 5 mass% lithium hydroxide for one hour, and baked in an air atmosphere at 1000°C for one hour to produce a lithium-containing nickel oxide electrode. It was estimated from X-ray diffraction analysis in Fig. 3 that the produced lithium-containing nickel oxide electrode was mainly composed of Li_{0.208}Ni_{1.792}O₂ and the molar ratio (Li/Ni) of lithium and nickel was 0.12 on average. It is clear from the X-ray diffraction analysis in Fig. 3 that the peaks estimated as Li_{0.208}Ni_{1.792}O₂ are shown as sharp peaks before and after a cycle test.

An electrochemical measurement described below was conducted at 25 ± 1°C in a 25 mass% aqueous potassium hydroxide solution. In an electrochemical pretreatment, 100 cycles of cyclic voltammetry (CV) were performed at a potential of 0 to 1.5 Vvs.RHE at a scanning rate of 100 mVs⁻¹. In a cycle test, 25000 cycles of CV were performed at a potential of 1.0 to 1.8 Vvs.RHE at a scanning rate of 1 Vs⁻¹. Before and after the cycle test, anode potentials at a current density of 100 mAcm⁻² were measured.

The oxygen evolution overvoltage increased as the number of cycles in the cycle test increased. However, the overvoltage-current density gradient before the cycle test was about 60 mVdec⁻¹. The gradient did not significantly vary after the cycle test, which means high stability. The overvoltage at a current density of 100 mAcm⁻² before the cycle test was 200 mV, and the overvoltage after the cycle test was 230 mV, which means that the overvoltage was substantially stable. Figs. 2A and 2B show the electron micrographs before and after the cycle test. A significant change in the crystalline state was not observed. Referring to the X-ray diffraction analysis in Fig. 3, some of peaks concerning LiNiO that were present before the cycle test became smaller after the cycle test, but the peak estimated as Li_{0.208}Ni_{1.792}O₂ did not change so much.

### (Example 2)

A lithium-containing nickel oxide electrode was produced in the same manner as in Example 1, except that the oxidation treatment was performed in an air atmosphere at 900°C for one hour. The molar ratio (Li/Ni) of lithium and nickel in the produced lithium-containing nickel oxide electrode was 0.14.

The same cycle test as in Example 1 was performed. The overvoltage at a current density of 100 mAcm⁻² before the cycle test was 210 mV, and the overvoltage after the cycle test was 250 mV, which means that the overvoltage was substantially stable. In electron micrographs, a significant change in the crystalline state was not observed. Referring to the X-ray diffraction analysis before and after the cycle test, the same change as in Example 1 was observed.

### (Comparative Example 1)

A lithium-containing nickel oxide electrode was produced in the same manner as in Example 1, except that the oxidation treatment was performed in an air atmosphere at 800°C for one hour. The molar ratio (Li/Ni) of lithium and nickel in the produced lithium-containing nickel oxide electrode was 0.18.

The same cycle test as in Example 1 was performed. The overvoltage at a current density of 100 mAcm⁻² before the cycle test was 440 mV, but the overvoltage after the cycle test was 240 mV. A change in the crystalline state was observed before and after the cycle test. It was confirmed from the X-ray diffraction analysis in Fig. 3 that, regarding the peaks concerning LiNiO that were present before the cycle test, the peak concerning Li_{0.208}Ni_{1.792}O₂ became smaller after the cycle test.

In the case where the heat treatment was performed at 800°C, a large amount of Li_{0.308}Ni_{1.692}O₂ (Li/Ni ratio: 0.177) having a large Li proportion was present, but only a small amount of Li_{0.208}Ni_{1.792}O₂ was present before the cycle test. After the cycle test, both the peaks of the large amount of Li_{0.308}Ni_{1.692}O₂ and the small amount of Li_{0.208}Ni_{1.792}O₂ disappeared. This may be because the stability of Li_{0.308}Ni_{1.692}O₂ was not sufficiently high.

### (Comparative Example 2)

A lithium-containing nickel oxide electrode was produced in the same manner as in Example 1, except that the oxidation treatment was performed in an air atmosphere at 700°C for one hour. The molar ratio (Li/Ni) of lithium and nickel in the produced lithium-containing nickel oxide electrode was 0.20.

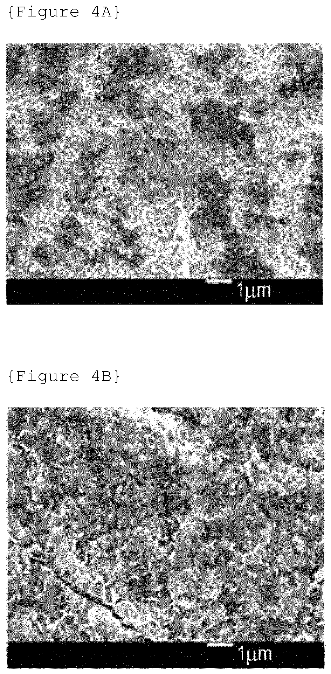

The same cycle test as in Example 1 was performed. The overvoltage at a current density of 100 mAcm⁻² before the cycle test was 310 mV, but the overvoltage after the cycle test was 230 mV. Figs. 4A and 4B show the electron micrographs. The crystalline state changed to some degree, and the formation of cracks was slightly observed.

### (Comparative Example 3)

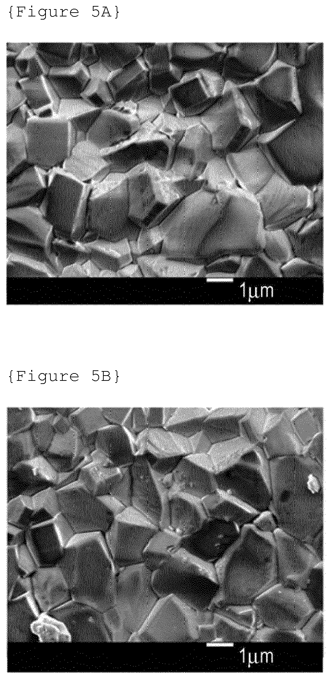

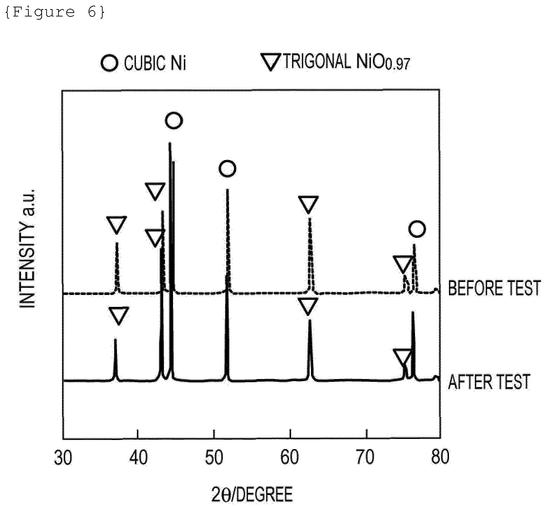

A nickel oxide electrode was produced in the same manner as in Example 1, except that the nickel plate was not immersed in lithium hydroxide. The same cycle test as in Example 1 was performed. The overvoltage at a current density of 100 mAcm⁻² before the cycle test was 400 mV, and the overvoltage after the cycle test was 410 mV, which means that the overvoltage was stable but high. Figs. 5A and 5B show the electron micrographs, and Fig. 6 shows the results of X-ray diffraction analysis. A significant change in the crystalline state was not observed.

### (Comparative Example 4)

A nickel plate subjected to mirror polishing at room temperature was used as an electrode. The nickel plate was subjected to the same cycle test as in Example 1. The overvoltage before the cycle test was low, but the overvoltage increased as the number of cycles increased. The overvoltage-current density gradient before the cycle test was about 60 mVdec⁻¹, but the gradient after 25000 cycles was as large as about 100 mVdec⁻¹. The overvoltage at a current density of 100 mAcm⁻² before the cycle test was 250 mV whereas the overvoltage after the cycle test was 350 mV. A significant increase in overvoltage was observed compared with Examples.

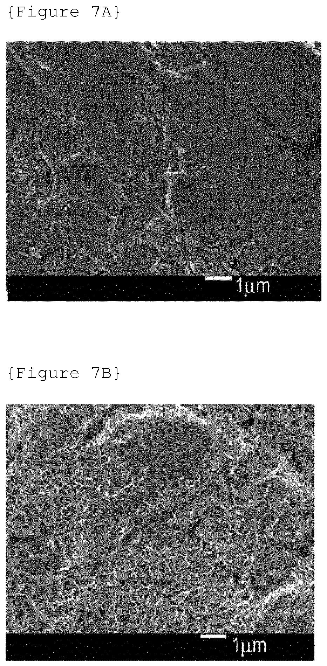

Figs. 7A and 7B show the electron micrographs before and after the cycle test. The surface state of the nickel electrode after the cycle test was different from the surface state of the nickel electrode before the cycle test. An increase in the volume was observed as a result of the formation of nickel oxide.

After the cycle test, X-ray diffraction analysis was performed on a powder that was formed on the surface of the nickel electrode and fell off in the solution. As a result, Ni(OH)₂ and NiO were detected. It is believed that a hydroxide and an oxide were formed on the surface of the electrode, and fell off due to the increase in volume and the erosion, corrosion, and the like caused by the generation of oxygen bubbles.

### Industrial Applicability

The technology of the present invention is provided by finding the following. In a substrate mainly composed of nickel and used to generate oxygen at high temperature and in a high-concentration aqueous alkaline solution, lithium-containing nickel oxide is formed on the surface of nickel by performing a heat treatment. Consequently, a nickel substrate which is thermodynamically unstable is not in direct contact with an electrolytic solution, and thus can be stably used for a long time. The catalytic layer of the present invention is excellent in terms of both catalytic activity and durability, and can be used for alkaline water electrolysis that uses electric power with large power fluctuations. The catalytic layer of the present invention can also be applied as an anode in other industrial electrolysis processes that use an alkaline electrolyte.

### Reference Signs List

- 1: Anode substrate
- 2: Catalytic layer

## Claims

1. An anode for alkaline water electrolysis, comprising:
a conductive substrate having at least a surface made of nickel or a nickel-base alloy; and
a lithium-containing nickel oxide catalytic layer formed on the surface of the substrate,
wherein a molar ratio (Li/Ni) of lithium and nickel in the catalytic layer is in the range of 0.005 to 0.15.

2. The anode for alkaline water electrolysis according to claim 1, wherein the anode is for use to perform alkaline water electrolysis using electric power with large power fluctuations that is generated by wind power or solar power.

3. A method for producing an anode for alkaline water electrolysis, the method comprising:
providing a solution containing lithium ions onto a surface of a conductive substrate having at least a surface made of nickel or a nickel-base alloy; and
heat-treating the substrate in an atmosphere containing oxygen at a temperature of 900°C to 1000°C to form a lithium-containing nickel oxide catalytic layer,
wherein a molar ratio (Li/Ni) of lithium and nickel in the catalytic layer is in the range of 0.005 to 0.15.

4. The method according to Claim 3, wherein the heat treatment is performed for 5 to 60 minutes.

5. The method according to Claim 3, wherein nickel ions are contained in the solution containing lithium ions.

## Patentansprüche

1. Anode für eine alkalische Wasserelektrolyse, umfassend:
ein leitfähiges Substrat, das wenigstens eine Oberfläche aufweist, bestehend aus Nickel oder einer Legierung auf Basis von Nickel; und
eine Lithium-haltige katalytische Nickeloxid-Schicht, die auf der Oberfläche des Substrats gebildet ist,
wobei das molare Verhältnis (Li/Ni) des Lithiums und des Nickels in der katalytischen Schicht in einem Bereich von 0,005 bis 0,15 liegt.

2. Anode für die alkalische Wasserelektrolyse nach Anspruch 1, wobei die Anode zur Verwendung ist, um eine alkalische Wasserelektrolyse unter Verwendung von elektrischem Strom mit hohen Leistungsschwankungen, der durch Windkraft oder Solarenergie erzeugt wird, durchzuführen.

3. Verfahren zur Herstellung einer Anode für die alkalische Wasserelektrolyse, wobei das Verfahren folgendes umfasst:
Bereitstellen einer Lithium-Ionen enthaltenden Lösung auf der Oberfläche eines leitfähigen Substrats, bei dem wenigstens eine Oberfläche aus Nickel oder einer Legierung auf Basis von Nickel besteht; und
Wärmebehandeln des Substrats in einer Sauerstoff-haltigen Atmosphäre bei einer Temperatur von 900°C bis 1000°C, um eine Lithium-haltige katalytische Nickeloxid-Schicht zu bilden,
wobei das molare Verhältnis (Li/Ni) des Lithiums und des Nickels in der katalytischen Schicht in einem Bereich von 0,005 bis 0,15 liegt.

4. Verfahren nach Anspruch 3, wobei die Wärmebehandlung für 5 bis 60 Minuten durchgeführt wird.

5. Verfahren nach Anspruch 3, wobei Nickel-Ionen in der Lösung enthalten sind, die die Lithium-Ionen enthält.

## Revendications

1. Anode pour l'électrolyse d'une eau alcaline, comprenant :
un substrat conducteur qui présente au moins une surface composée de nickel ou d'un alliage à base de nickel ; et
une couche catalytique d'oxyde de nickel contenant du lithium, formée sur la surface du substrat,
un rapport molaire (Li/Ni) du lithium et du nickel dans la couche catalytique étant situé dans la plage de 0,005 à 0,15.

2. Anode pour l'électrolyse d'une eau alcaline selon la revendication 1, l'anode étant destinée à être utilisée pour réaliser l'électrolyse d'une eau alcaline à l'aide de courant électrique avec de grandes fluctuations de courant, qui est produit par de l'énergie éolienne ou de l'énergie solaire.

3. Procédé pour produire une anode pour l'électrolyse d'une eau alcaline, le procédé comprenant :
l'amenée d'une solution contenant des ions de lithium sur une surface d'un substrat conducteur qui présente au moins une surface composée de nickel ou d'un alliage à base de nickel ; et
le traitement thermique du substrat dans une atmosphère contenant de l'oxygène à une température de 900°C à 1000°C, pour former une couche catalytique d'oxyde de nickel contenant du lithium,
un rapport molaire (Li/Ni) du lithium et du nickel dans la couche catalytique étant situé dans la plage de 0,005 à 0,15.

4. Procédé selon la revendication 3, selon lequel le traitement thermique est réalisé pendant 5 à 60 minutes.

5. Procédé selon la revendication 3, selon lequel les ions de nickel sont contenus dans la solution qui contient les ions de lithium.
